# EUROPEAN PATENT APPLICATION

(11) **EP 1 458 043 A1**
(43) Date of publication of application: **15.09.2004**
(21) Application number: 04251437.2
(22) Date of filing: 12.03.2004
(51) Int. Cl.: H01M 8/02, H01M 8/12, H01M 8/24

(54) **Fuel cell and method for manufacturing fuel cell**

(30) Priority: 14.03.2003 US 249086
(71) Applicant: GENERAL ELECTRIC COMPANY, Schenectady, NY 12345 (US)
(72) Inventor: Wortman, David John, Clifton Park New York 12065 (US); Johnson, Curtis Mark, Niskayuna New York 12309 (US); Thompson, Anthony Mark, Niskayuna New York 12309 (US); Lipkin, Don Mark, Niskayuna New York 12309 (US)
(74) Representative: Pedder, James Cuthbert

(57) **Abstract**

A fuel cell and a method for manufacturing a fuel cell are presented. The method comprises providing at least one substrate (202) and disposing a plurality of fuel cell component layers (204) on the substrate (202) by at least one physical vapor deposition (PVD) process. Each layer of the plurality comprises an edge bordering the layer (304). The fuel cell unit comprises at least one substrate (202); a plurality of fuel cell component layers (204) disposed on the substrate (202), wherein each layer (204) of the plurality comprises an edge bordering the layer (304); and at least one dense layer of material disposed over at least a portion of the edge of at least one fuel cell component layer. The at least one dense layer seals at least the aforementioned portion of the edge.

## Description

This invention relates to solid oxide fuel cells. More particularly, this invention relates to methods for manufacturing solid oxide fuel cells. This invention also relates to fuel cells manufactured by such methods.

Solid oxide fuel cells (SOFC's) in part comprise a solid electrolyte layer interposed between two electrodes, the electrodes comprising an anode and a cathode. The electrolyte layer is usually dense so as to be impermeable to gas flow and comprises a material that is an electron insulator and an ion conductor, such as, for example, stabilized zirconia. The electrolyte layer is also generally desired to be as thin as possible to minimize resistance to ionic conduction within the electrolyte layer. In contrast to the dense electrolyte, both the anode and the cathode comprise pores to allow flow of gas within each electrode in order to maintain a local environment suitable for the electrochemical reactions taking place therein. The cathode usually comprises a ceramic material that is doped for high electrical conductivity, such as strontium-doped lanthanum manganite (also referred to herein as lanthanum strontium manganite), and is maintained in an oxidizing atmosphere, such as air or other gas comprising oxygen. The anode usually comprises a mixture of a metal with a ceramic, such as nickel with stabilized zirconia, and is maintained in a reducing atmosphere (referred to herein as the "fuel gas"), such as a gas comprising hydrogen. Interconnection plates, also referred to herein as "interconnects," often electrically connect several anode-electrolyte-cathode units (hereinafter referred to as "fuel cell units") with one another to form a fuel cell.

SOFC electrodes and electrolyte layers are typically manufactured using conventional ceramic fabrication methods, such as tape casting, tape calendaring, coat-mix processes, and screen-printing. One significant disadvantage of these conventional techniques is that obtaining the hermetic sealing required to keep the oxidizing gas flowpath and fuel gas flowpaths separated is difficult.

Further drawbacks of these conventional methods include, for example, the following: undesirable warping of the multilayer cell due to disparate shrinkage rates among the various layers; difficulties in bonding freestanding sintered cells to the metallic interconnect; limitations in the minimum allowable thickness of the total cell due to the need for sufficient strength to avoid cracking the structure during handling and fabrication; and significant amounts of time to manufacture and assemble the fragile layers into a fuel cell stack assembly.

An increasing demand for fuel cells having higher power density drives a need for thinner electrodes and electrolytes, and thus there is a need to provide improved methods for manufacturing thin, mechanically robust fuel cell components and assemblies. Furthermore, there is a need for improved methods that reduce the manufacturing and assembly time of fuel cell components. Additionally, there is a still further need for fuel cell components and assemblies that are thin and sufficiently robust to withstand the rigors of manufacturing, assembly, and operating stresses.

Embodiments of the present invention address these and other needs. One embodiment is a method for manufacturing a fuel cell assembly. The method comprises providing at least one substrate; and disposing a plurality of fuel cell component layers on the substrate by at least one physical vapor deposition process. Each layer of the plurality comprises an edge bordering the layer.

A second embodiment is a fuel cell assembly comprising at least one unit. The unit comprises at least one substrate; a plurality of fuel cell component layers disposed on the substrate, wherein each layer of the plurality comprises an edge bordering the layer; and at least one dense layer of material disposed over at least a portion of the edge of at least one fuel cell component layer. The at least one dense layer seals at least the aforementioned portion of the edge.

The invention will now be described in greater detail, by way of example, with reference to the drawings, in which:-
Figure 1 is a schematic illustration of a prior art solid oxide fuel cell unit;
Figure 2 is a cross-section view of a fuel cell unit of the present invention;
Figure 3 is a top view of a fuel cell unit of the present invention;
Figure 4 is a cross-section illustration depicting a partially manufactured fuel cell unit;
Figures 5-8 depict steps in the method of the present invention;
Figure 9 is a cross-section illustration of a fuel cell assembly of the present invention; and
Figure 10 is a cross-section illustration depicting a further embodiment of a fuel cell assembly of the present invention.

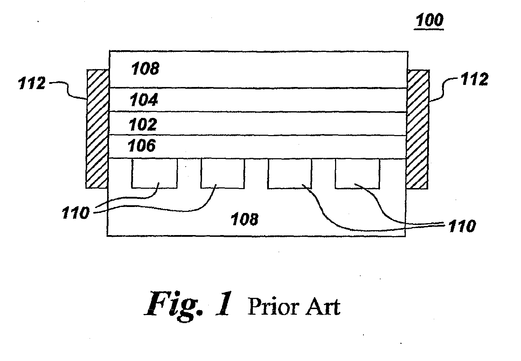

Referring to Figure 1, a typical planar fuel cell unit 100 comprises a stack of component layers, where the stack comprises a dense electrolyte 102 layer interposed between, and in contact with, a porous anode 104 layer and a porous cathode 106 layer. The stack is often attached to a metallic interconnect 108, which often comprises channels 110 disposed to allow the flow of two distinct gas streams. The gas stream flowing in channels 110 adjacent to cathode 106 is the oxidizing gas, and the gas stream flowing in channels adjacent to anode 104 is the fuel gas, as described above. In fuel-efficient designs, the fuel gas and oxidizing gas flow paths are generally kept separate throughout the cell, including at both the inlet and the exhaust of the fuel cell. The electrolyte 102 and interconnect 108 layers generally are sufficiently dense to hermetically seal the flows within the bulk of the fuel cell unit, but edges of the stack need to have dense seals 112 applied to avoid leakage out the sides of the stack. Furthermore, in fuel cell assemblies comprising a plurality of fuel cell units 100, gas is typically delivered through a manifold (not shown). The manifold may be external to the fuel cell units 100 or internal to the units 100, but in either case, seals are needed to keep fuel gas from contacting the cathode and to keep the oxidizing gas from contacting the anode. Oxidation of the anode is a particularly undesirable situation, as it can lead to expansion stresses and failure of the fuel cell.

A number of approaches have been used previously to create seals including, for example, glass or glass ceramic materials, metallic and ceramic gaskets, and rope or fiber seals. Each of these seals requires an additional manufacturing step. The major disadvantage to such approaches, however, is that they do not provide a reliable hermetic seal when cycled between the operating temperature and ambient temperature.

The power output of the fuel cell directly relates to the size and number of fuel cell units 100 assembled into a fuel cell, and so maximizing the size or number of fuel cell units 100 in the fuel cell is desirable. As the scale of the fuel cell increases, however, achieving effective sealing at layer edges and manifold interfaces by conventional means becomes increasingly difficult.

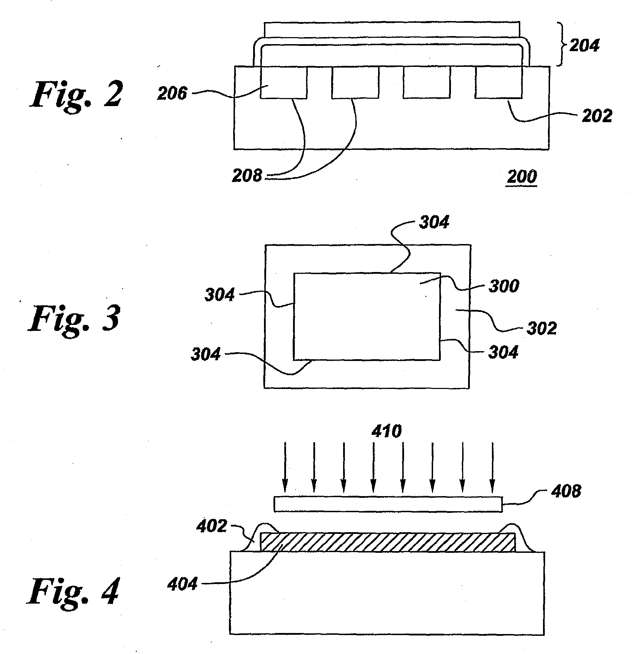

Embodiments of the present invention include a method for manufacturing a fuel cell assembly. Referring to Figure 2, the method comprises providing at least one substrate 202; and disposing a plurality of fuel cell component layers 204 on the substrate by at least one physical vapor deposition process. Figure 3 presents a top view of a typical fuel cell component layer 300 disposed on a substrate 302 in accordance with embodiments of the present invention. Each layer 300 disposed on substrate 302 comprises an edge 304 bordering layer 300, that is, edge 304 defines the perimeter of layer 300 as viewed from the top as in Figure 3. The fact that substrate 302 and layer 300 are depicted in Figure 3 as rectangular in shape is not to be construed to limit embodiments of the invention in any way, as those skilled in the art will appreciate that both substrate 302 and layer 300 may be processed into any of a variety of shapes.

In certain embodiments of the present invention, providing the at least one substrate 202 comprises providing at least one of an interconnect, an anode, and a cathode. In most cases, substrate 202 is selected in part to provide mechanical support for the fuel cell unit 200. The term "electrode-supported" is used in the art to describe a fuel cell unit 200 in which either of the two electrode layers, namely the anode and the cathode, serves as the supportive substrate, while the term "interconnect-supported" is used herein to describe a fuel cell unit 200 in which the interconnect provides the support function.

In some embodiments, providing substrate 202 comprises providing a substrate 202 comprising sacrificial material 206. This sacrificial material 206 is typically used in embodiments where internal channels 208 are desired to be disposed within a fuel cell unit 200. Such internal channels 208 are typically used to allow oxidizing gas and fuel gas to flow within the fuel cell unit 200. The exemplary, non-limiting embodiment illustrated in Figure 2 shows an interconnect-supported fuel cell unit 200 in which channels 208 have been disposed by machining or other method of creating a patterned surface. Sacrificial material 206 is disposed within channels 208 prior to disposing the plurality of fuel cell component layers 204. In this way, sacrificial material 206 serves to create a planar surface upon which layers 204 may be disposed. At a point subsequent to disposition of layers 204, sacrificial material 206 is then removed to create hollow internal channels through which gas may flow during operation of fuel cell unit 200. Removal of sacrificial material 206 is accomplished by any of several suitable methods, including dissolution in a solvent, decomposition at elevated temperature, and mechanical removal, depending in large part upon the identity of the selected sacrificial material 206. Suitable sacrificial materials include polymers, salts, and carbon.

Disposing the plurality of fuel cell component layers 204 is accomplished by at least one physical vapor deposition (also referred to herein as "PVD") process. During a PVD process, the material to be deposited is physically transferred from a source, such as, for example, by ejection from a solid target by energetic gas ions or by evaporation from a molten pool, to the surface upon which the coating is formed, whereupon the material is deposited as individual atoms or molecules. Such processes are known in the art of surface engineering to be useful for the deposition of protective and decorative coatings. In certain embodiments of the present invention, disposing the plurality of fuel cell component layers 204 comprises disposing the plurality of layers 204 using at least one PVD process selected from the group consisting of sputtering, ion plasma deposition, electron beam physical vapor deposition, laser ablation, and plasma arc deposition.

The use of PVD in embodiments of the present invention exploits several advantageous features of the processes and the coatings produced by such processes, and applies these advantages to the formation of functional component layers 204 for use in fuel cells. One of these advantages is the ability of PVD to deposit coatings, referred to as "graded coatings," comprising a gradient in at least one material characteristic. A graded coating comprises material having a value for at least one material property that varies as a function of position within the coating. Graded coatings are readily formed via PVD processes by varying deposition conditions (such as, for example, the pressure of gas in the PVD processing chamber and temperature of the article being coated) during the time in which the material is being deposited. In this way, a gradient in at least one material property is achieved in the direction perpendicular to the surface upon which the coating is deposited, because the material deposited first (that is, closest to the surface being coated) will have a first value for the given material property; this property value will be different for the material deposited immediately over this initial material because processing conditions have changed; and so on for subsequently deposited material until the PVD process is halted.

In certain embodiments of the present invention, disposing the plurality of fuel cell component layers 204 further comprises disposing at least one layer comprising a gradient in at least one property selected from the group consisting of composition, grain size, and porosity. The ability to deposit graded coatings is advantageous to the manufacture of fuel cells, in that, for example, the properties of any of the component layers 204 may be tailored in response to gradients in localized operating conditions that are known to occur as a function of depth within a given component layer.

The use of PVD in the manufacture of fuel cell assemblies further advantageously provides the ability to deposit a wide variety of material compositions. The materials deposited for any particular layer of the plurality of fuel cell component layers 204 depends on such factors as, for example, the function of the layer, the desired performance of the fuel cell, and the like. Those skilled in the art will appreciate that certain materials are well known to be suitable for use in particular fuel cell components. In certain embodiments, disposing the plurality of fuel cell component layers 204 comprises disposing at least one of an anode, a cathode, an electrolyte, and an interconnect. In some embodiments, disposing the electrolyte comprises disposing an ionically conductive ceramic, such as, for example, a material comprising at least one of yttria-stabilized zirconia, lanthanum gallate, doped cerium oxide, and ceria-stabilized zirconia. Disposing the anode, in further embodiments, comprises disposing a mixture comprising a. at least one of a metal and a metal oxide, and b. an electrolyte material. The term "electrolyte material" is used herein to mean any ionically conducting material including, but not limited to, materials commonly used in the art as electrolytes in solid oxide fuel cells. In specific embodiments, disposing the anode comprises disposing material comprising at least one of nickel, nickel oxide, a platinum-group metal, and yttria-stabilized zirconia. According to still further embodiments, disposing the cathode layer comprises disposing a material comprising at least one perovskite-structured material. Platinum-group metals are also suitable for use as fuel cell cathode layers. Furthermore, the addition of electrolyte material to the cathode has been shown to increase cell performance. Accordingly, in specific embodiments, disposing the cathode comprises disposing a material comprising at least one of a platinum-group metal, yttria-stabilized zirconia, lanthanum strontium manganite, lanthanum ferrite, and lanthanum cobaltite. Those skilled in the art will appreciate that certain materials, such as, for example, lanthanum ferrite, are often doped with particular materials to improve their performance as fuel cell components. Finally, in certain embodiments, disposing the interconnect comprises disposing an electrically conductive material comprising at least one of a metal and lanthanum chromite.

Disposing fuel cell component layers 204 by PVD processes advantageously allows the fabrication of layers 204 having significantly lower thickness than layers fabricated using conventional ceramic processing techniques commonly used in the art. As described above, a thin component layer generally has a lower ionic resistance than a thick layer, and thus thinner layers are desirable to improve fuel cell performance. In some embodiments, disposing the electrolyte comprises disposing a layer having a thickness of up to about 100 micrometers. In certain embodiments, disposing the electrolyte layer comprises disposing a layer having a thickness of up to about 20 micrometers, such as, for example, a thickness of up to about 10 micrometers. Electrode thickness, including anode thickness and cathode thickness, also affects cell performance. As the thickness of the porous electrode increases the rate of gas transport to the electrolyte is reduced; additionally, the electrical resistance of electrically conducting phases within the electrode increases.

In some embodiments, disposing the cathode comprises disposing a layer having a thickness of up to about 1000 micrometers. In particular embodiments, disposing the cathode layer comprises disposing a layer having a thickness of up to about 100 micrometers, such as, for example, a thickness of up to about 20 micrometers. Those skilled in the art will appreciate that an electrode-supported fuel cell unit will generally comprise a relatively thick electrode layer for the particular electrode supporting the cell unit. According to some embodiments of the present invention, disposing the anode comprises disposing a layer having a thickness of up to about 1000 micrometers. In certain embodiments, such as, for example, embodiments in which the fuel cell unit is not anode-supported, disposing the anode layer comprises disposing a layer having a thickness of up to about 100 micrometers, such as, for example, a thickness of up to about 20 micrometers.

A further advantage provided by the use of PVD processes in the manufacture of a fuel cell assembly is the ability to seal the fuel cell in a significantly more facile manner than is available through conventional methods. Referring to Figure 4, the method of the present invention, in some embodiments, further comprises disposing a dense layer 402 of material by a physical vapor deposition process over at least a portion of the edge 404 of at least one fuel cell component layer 406 to seal the edge 404 of the at least one component layer 406. As used herein, the term "seal" means to close off in a manner so as to significantly restrict gas flow through the sealed region to less than about 10% of the overall flow rate of the gas being restricted. Those skilled in the art will appreciate that overall system efficiency requirements generally determine the range of acceptable allowed leakage; although this range is generally between about 1 % and 5% of the overall flow rate of the gas being leaked (i.e., fuel or air), some systems may allow higher ranges of leakage. In certain embodiments, the dense layer substantially hermetically seals edge 404, meaning that gas flow through the sealed edge 404 is substantially prevented.

Dense layer 402 is applied using a number of suitable techniques. For example, in certain embodiments, disposing dense layer 402 further comprises applying a mask to allow selective deposition of dense layer 402. Figure 4 illustrates one example of how applying a mask is used in PVD processing according to certain embodiments of the present invention. A "shadow mask" 408 is positioned such that the impinging species 410 are intercepted by mask 408 except for the areas in which dense layer 402 is desired to be formed. In this way, a seal is easily fabricated at the edges 404 of component layers 406.

In some embodiments, disposing dense layer 402 comprises disposing a layer comprising a material used to form at least one component layer 406 of the plurality of component layers 204 (Figure 2) of the fuel cell assembly, including, for example, one of an anode, a cathode, an electrolyte, and an interconnect. In some embodiments where the dense layer 402 comprises a material used to form the electrolyte, the material comprises, for example, at least one of yttria-stabilized zirconia, lanthanum gallate, doped cerium oxide, and ceria-stabilized zirconia. In alternative embodiments where the dense layer 402 comprises a material used to form the interconnect, dense layer 402 comprises, for example, at least one of a metal and an electrically conductive oxide, such as lanthanum chromite.

Those skilled in the art will appreciate that the use of masking is not limited to the fabrication of dense layer 402. In some embodiments, disposing the plurality of fuel cell component layers 204 (Figure 2) further comprises masking the substrate 202 to selectively deposit at least one layer of said plurality of fuel cell component layers. In specific embodiments, masking comprises at least one of shadow masking (that is, the application of a shadow mask 408) and applying a hard mask (not shown) to substrate 202.

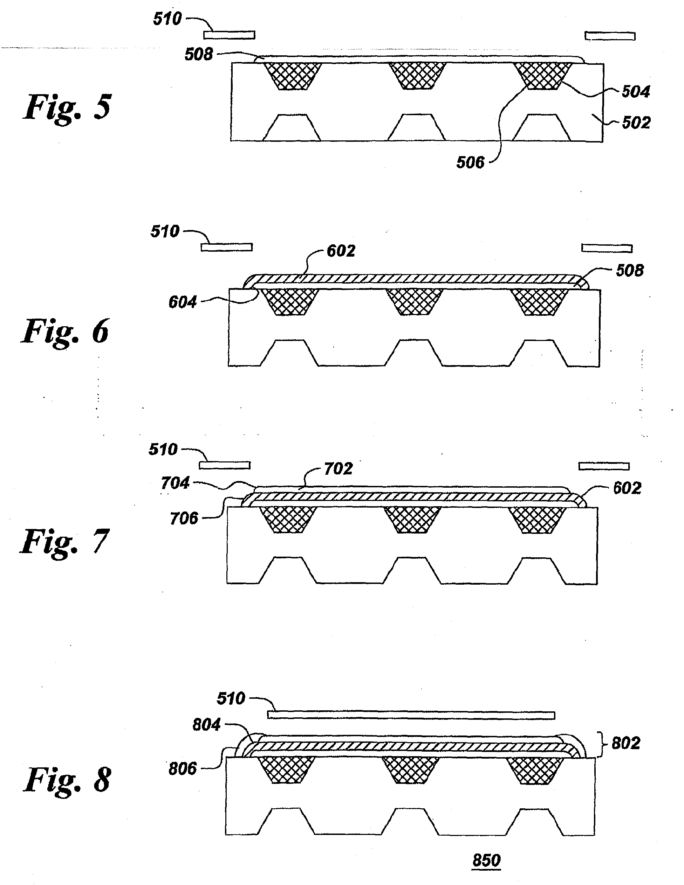

Figures 5-8 illustrate a non-limiting, exemplary method by which a fuel cell unit is fabricated according to embodiments of the present invention. A substrate 502 is provided. A plurality of fuel cell component layers 802 (Figure 8) is disposed on substrate 502 by at least one physical vapor deposition process, wherein each layer comprises an edge 804 (Figure 8) bordering the layer. A dense layer 806 of material is disposed by the at least one physical vapor deposition process over at least a portion of edge 804 of at least one fuel cell component layer 802 to seal edge 804. In the non-limiting example illustrated in Figures 5-8, substrate 502 comprises an interconnect having internal channels 504 patterned into its surface. Channels are filled with sacrificial material 506 to create a planar surface prior to disposing the component layers 802 (Figure 8). In Figure 5, a cathode layer 508 is disposed on substrate 502 by at least one PVD process. Shadow mask 510 is applied to selectively deposit cathode layer 508 in a desired area. In the next step of the exemplary operation, illustrated in Figure 6, a dense electrolyte layer 602 is disposed over cathode layer 508 by a PVD process. In this step, mask 510 is positioned to allow a larger deposition area, thereby allowing the dense electrolyte 602 material to cover and seal the edges 604 of cathode layer 508. In the next step, illustrated in Figure 7, an anode layer 702 is disposed by a PVD process, and in this step, mask 510 is positioned to restrict the area of deposition such that the edge 704 of anode 702 does not overlap edge 706 of electrolyte 602. In the final step discussed in this particular example, illustrated in Figure 8, the dense layer 806 is disposed by a PVD process, and mask 510 is positioned to selectively apply dense layer 806 over edge 704 of anode 702. By the use of the above exemplary method, fuel cell unit 850 having sealed layer edges is fabricated in-situ without the need for excessive handling or other manipulation of the unit. Those skilled in the art will appreciate that other variations on the above example are possible and are within the scope of the present invention. For example, the order in which the electrode layers (cathode 508 and anode 702) are disposed may be reversed; furthermore, the substrate 502 may be an anode or a cathode as an alternative to the interconnect of the above example.

Other layers in addition to the fuel cell component layers 802 may be disposed. For example, in some embodiments, the method further comprises disposing at least one diffusion barrier layer (not shown) on at least one component of the fuel cell selected from the group consisting of a. substrate 502 and b. at least one individual layer of the plurality of fuel cell component layers 802. Diffusion barrier layers are used to avoid intermixing, via solid state diffusion, of different layer materials. In certain embodiments, the at least one diffusion barrier layer is disposed using a physical vapor deposition process. Those skilled in the art will appreciate that the selection of a suitable diffusion barrier layer material depends upon, for instance, the materials desired to be contained by the barrier layer, the temperature and expected lifetime of the fuel cell, cost, and the like. In certain embodiments, disposing at least one diffusion barrier layer comprises disposing a material comprising an oxide, such as, for example, an oxide selected from the group consisting of cerium-gadolinium oxide and samarium-doped cerium oxide. Cerium-gadolinium oxide is used in the art to reduce the interdiffusion and chemical interaction between a layer of YSZ and a layer of lanthanum cobaltite, lanthanum strontium ferrite or mixtures thereof, while samarium-doped cerium oxide (Ce₁₋ₓSmₓO_{2-0.5x}) is used in the art to reduce the interdiffusion and chemical interaction between materials such as nickel oxide, cerium oxide, and other oxide materials used in anodes of solid oxide fuel cells.

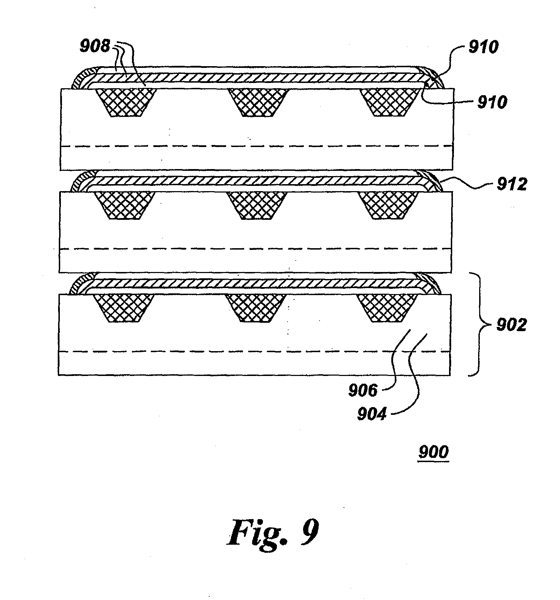

As depicted in Figure 9, further embodiments of the present invention include a fuel cell assembly 900 comprising at least one fuel cell unit 902. Unit 902 comprises at least one substrate 904. The various alternative fuel cell components and materials described above as suitable for use as substrate 904 in the method embodiments are also suitable for use in the fuel cell assembly 900 embodiments of the present invention. For example, the non-limiting exemplary embodiment depicted in Figure 9 shows fuel cell unit 902 comprising substrate 904, wherein substrate 904 is an interconnect 906. A plurality of fuel cell component layers 908 is disposed on substrate 904, and, as described above, each layer comprises an edge 910 bordering the layer. The various alternative fuel cell components, and materials, and layer thicknesses described above as suitable for use as component layers 908 in the method embodiments of the present invention are also suitable for use in fuel cell 900 of the present invention, including embodiments wherein at least one layer 908 comprises a gradient in at least one property selected from the group consisting of composition, grain size, and porosity. Fuel cell unit 902 further comprises a least one dense layer 912 of material disposed over at least a portion of edge 910 of at least one fuel cell component layer 908. The at least one dense layer 912 seals, and, in some embodiments, substantially hermetically seals, at least the portion of the edge 910 on which it is disposed. Again, suitable alternatives for the materials used to fabricate the at least one dense layer 912 have been discussed in the aforementioned method embodiments. Furthermore, fuel cell assembly 900, in certain embodiments, further comprises at least one diffusion barrier, as described previously, disposed on at least one component of the fuel cell assembly 900 selected from the group consisting of substrate 902 and at least one individual layer of said plurality of fuel cell component layers 908.

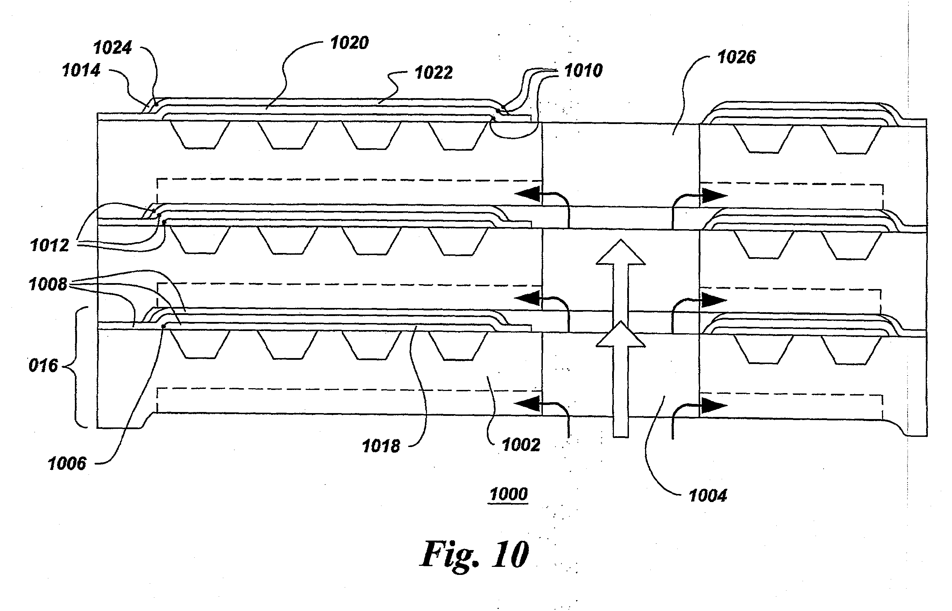

Figure 10 depicts a further embodiment of the present invention. In this embodiment, fuel cell assembly 1000 comprises a substrate 1002, and substrate 1002 comprises an interconnect. Substrate 1002 further comprises at least one through-thickness hole 1004. Edge 1006 of each fuel cell component layer 1008 comprises a proximal portion 1010 adjacent to hole 1004 and a distal portion 1012 opposite to proximal portion 1010. The at least one dense layer 1014 is disposed over at least the distal portion 1012 of edge 1006. Such an arrangement allows for the fabrication of an internally manifolded fuel cell assembly, where the at least one dense layer 1014 serves to seal the cell edges. The application of dense layers 1014 is especially facilitated by the use of PVD processes according to embodiments of the present invention, because these methods are used to apply thin, dense, substantially hermetic layers without the need for mechanical manipulation of the unit.

In a particular embodiment of the aforementioned fuel cell assembly 1000, the at least one fuel cell unit 1016 comprises an interconnect substrate 1002 and a cathode layer 1018 disposed on the substrate. A dense electrolyte layer 1020 is disposed over cathode 1018. Electrolyte layer 1020 overlaps substantially all of the edge 1006 of cathode layer 1018. Because it is a dense layer, electrolyte 1020 substantially hermetically seals cathode layer 1018 from the remainder of the plurality of layers 1008. An anode layer 1022 is disposed over electrolyte layer 1020, and a dense layer 1014 of material is disposed over distal portion 1024 of edge of cathode layer 1022. An internally manifolded fuel cell assembly 1000 according to the present invention thus comprises a plurality of fuel cell units 1016. The units 1016 are electrically connected to each other and stacked such that through thickness holes 1004 are aligned to allow flow of gas within the assembly 1000. Note that the resulting gas passageway 1026 may be used to supply gas to the assembly 1000 or as an exhaust port to take gas away from the assembly 1000, and in general, both types of passageways (supply and exhaust) will be used in a fuel cell assembly 1000.

For the sake of good order, various aspects of the invention are set out in the following clauses:-
1. A method for manufacturing a fuel cell assembly (900), said method comprising:
   providing at least one substrate (202); and
   disposing a plurality of fuel cell component layers (204) on said substrate (202) by at least one physical vapor deposition (PVD) process, wherein each layer of said plurality comprises an edge (304) bordering said layer.
2. The method of clause 1, wherein disposing said plurality of fuel cell component layers (204) comprises disposing at least one of an anode (1022), a cathode (1018), an electrolyte (1020), and an interconnect (1002).
3. The method of clause 1, further comprising disposing a dense layer (912) of material by a physical vapor deposition process over at least a portion of said edge (304) of at least one fuel cell component layer (204) to seal said edge (304) of said at least one component layer (204).
4. The method of clause 3, wherein disposing said dense layer (912) further comprises disposing said dense layer (912) to substantially hermetically seal said edge (304) of said at least one component layer (204).
5. The method of clause 3, wherein disposing said dense layer (912) comprises disposing a layer comprising a material used to form at least one component layer (204) of said plurality of component layers of said fuel cell assembly.
6. The method of clause 5, wherein disposing said dense layer (912) further comprises applying a mask (408) to allow selective deposition of said dense layer (912).
7. The method of clause 5, wherein said at least one component is selected from the group consisting of an anode (1022), a cathode (1018), an electrolyte (1020), and an interconnect (1002).
8. The method of clause 7, wherein said at least one component comprises an electrolyte (1020).
9. The method of clause 8, wherein said material comprises at least one of yttria-stabilized zirconia, lanthanum gallate, doped cerium oxide, and ceria-stabilized zirconia.
10. The method of clause 7, wherein said at least one component comprises an interconnect (1002).
11. The method of clause 10, wherein said material comprises at least one of an electrically conductive oxide and a metal.
12. The method of clause 1, wherein disposing said plurality of fuel cell component layers (204) further comprises disposing at least one layer comprising a gradient in at least one property selected from the group consisting of composition, grain size, and porosity.
13. The method of clause 1, wherein providing said at least one substrate (202) comprises providing at least one of an interconnect (1002), an anode (1022), and a cathode (1018).
14. The method of clause 1, wherein providing said at least one substrate (202) comprises providing a substrate (202) comprising sacrificial material (206).
15. The method of clause 14, wherein providing said substrate (202) comprising sacrificial material (206) comprises providing a material comprising polymers, salts, and carbon.
16. The method of clause 1, wherein disposing said plurality of fuel cell component layers (204) on said substrate (202) by PVD comprises disposing said plurality of said layers using at least one PVD process selected from the group consisting of sputtering, ion plasma deposition, electron beam physical vapor deposition, laser ablation, and plasma arc deposition.
17. The method of clause 2, wherein disposing said electrolyte (1020) comprises disposing a material comprising at least one of yttria-stabilized zirconia, lanthanum gallate, doped cerium oxide, and ceria-stabilized zirconia.
18. The method of clause 2, wherein disposing said anode (1022) comprises disposing a mixture comprising a. at least one of a metal and a metal oxide, and b. an electrolyte material.
19. The method of clause 18, wherein disposing said anode (1022) comprises disposing a material comprising at least one of nickel, nickel oxide, a platinum-group metal, and yttria-stabilized zirconia.
20. The method of clause 2, wherein disposing said cathode (1018) comprises disposing at least one of a perovskite-structured material, a platinum-group metal, and an electrolyte material.
21. The method of clause 20, wherein disposing said cathode (1018) comprises disposing a material comprising at least one of a platinum-group metal, yttria-stabilized zirconia, lanthanum strontium manganite, lanthanum ferrite, and lanthanum cobaltite.
22. The method of clause 2, wherein disposing said interconnect (1002) comprises disposing an electrically conducting material comprising at least one of a metal and lanthanum chromite.
23. The method of clause 2, wherein disposing said electrolyte (1020) comprises disposing a layer having a thickness of up to about 100 micrometers.
24. The method of clause 23, wherein disposing said layer comprises disposing a layer having a thickness of up to about 20 micrometers.
25. The method of clause 24, wherein disposing said layer comprises disposing a layer having a thickness of up to about 10 micrometers.
26. The method of clause 2, wherein disposing said cathode (1018) comprises disposing a layer having a thickness of up to about 1000 micrometers.
27. The method of clause 26, wherein disposing said layer comprises disposing a layer having a thickness of up to about 100 micrometers.
28. The method of clause 27, wherein disposing said layer comprises disposing a layer having a thickness of up to about 20 micrometers.
29. The method of clause 2, wherein disposing said anode (1022) comprises disposing a layer having a thickness of up to about 500 to 1000 micrometers.
30. The method of clause 29, wherein disposing said layer comprises disposing a layer having a thickness of up to about 100 micrometers.
31. The method of clause 30, wherein disposing said layer comprises disposing a layer having a thickness of up to about 20 micrometers.
32. The method of clause 1, wherein disposing said plurality of fuel cell component layers (204) further comprises mask (408)ing the substrate (202) to selectively deposit at least one layer of said plurality of fuel cell component layers (204).
33. The method of clause 32, wherein mask (408)ing comprises at least one of shadow mask (408)ing and applying a solid mask (408) to said substrate (202).
34. The method of clause 1, further comprising disposing at least one diffusion barrier layer on at least one component of the fuel cell selected from the group consisting of
   a. said substrate (202), and
   b. at least one individual layer of said plurality of fuel cell component layers (204).
35. The method of clause 34, wherein disposing said at least one diffusion barrier layer comprises disposing said diffusion barrier layer using a physical vapor deposition process.
36. The method of clause 34, wherein disposing said at least one diffusion barrier layer comprises disposing a material comprising an oxide.
37. The method of clause 36, wherein disposing said material comprising said oxide comprises disposing a material comprising an oxide selected from the group consisting of cerium-gadolinium oxide and samarium-doped cerium oxide.
38. A method for manufacturing a fuel cell assembly, said method comprising:
   providing at least one substrate (202);
   disposing a plurality of fuel cell component layers (204) on said substrate (202) by at least one physical vapor deposition process, wherein each layer of said plurality comprises an edge (304) bordering said layer; and
   disposing a dense layer (912) of material by said physical vapor deposition process over at least a portion of said edge (304) of at least one fuel cell component layer to seal said edge (304) of said at least one component layer (204).
39. A fuel cell assembly, comprising:
   at least one unit, said at least one unit comprising
   at least one substrate (202);
   a plurality of fuel cell component layers (204) disposed on said substrate (202), wherein each layer of said plurality comprises an edge (304) bordering said layer; and
   at least one dense layer (912) of material disposed over at least a portion of said edge (304) of at least one fuel cell component layer, where in said at least one dense layer (912) seals at least said portion of said edge (304).
40. The fuel cell assembly of clause 39, wherein said at least one dense layer (912) substantially hermetically seals at least said portion of said edge (304).
41. The fuel cell assembly of clause 39, wherein said at least one substrate (202) comprises an interconnect (1002).
42. The fuel cell assembly of clause 41, wherein said substrate (202) further comprises at least one through-thickness hole, wherein said edge (304) of each fuel cell component layer comprises a proximal portion adjacent to said hole and a distal portion opposite to said proximal portion, and wherein said dense layer (912) is disposed over at least said distal portion of said edge (304) of at least one fuel cell component layer.
43. The fuel cell assembly of clause 42, wherein said at least one unit comprises
   an interconnect (1002) substrate (202);
   an cathode (1018) layer disposed on said substrate (202);
   a dense electrolyte (1020) layer disposed over said cathode (1018), wherein said dense electrolyte (1020) layer overlaps substantially all of said edge (304) of said cathode (1018) layer to substantially hermetically seal said cathode (1018) layer from the remainder of said plurality of layers;
   an anode (1022) layer disposed over said electrolyte (1020) layer; and
   a dense layer (912) disposed over said distal portion of said edge (304) of said anode (1022) layer.
44. The fuel cell assembly of clause 43, wherein said assembly comprises a plurality of said units, said units stacked such that said through-thickness holes are aligned to allow flow of gas within said fuel cell assembly.
45. The fuel cell assembly of clause 39, wherein said plurality of fuel cell component layers (204) comprises at least two component layers selected from the group consisting of an anode (1022), a cathode (1018), an electrolyte (1020), and an interconnect (1002).
46. The fuel cell assembly of clause 45, wherein said anode (1022) has a thickness of up to about 500 micrometers.
47. The fuel cell assembly of clause 46, wherein said thickness of said anode (1022) is up to about 100 micrometers.
48. The fuel cell assembly of clause 47, wherein said thickness of said anode (1022) is up to about 20 micrometers.
49. The fuel cell assembly of clause 45, wherein said cathode (1018) has a thickness of up to about 1000 micrometers.
50. The fuel cell assembly of clause 49, wherein said thickness of said cathode (1018) is up to about 100 micrometers.
51. The fuel cell assembly of clause 50, wherein said thickness of said cathode (1018) is up to about 20 micrometers.
52. The fuel cell assembly of clause 45, wherein said electrolyte (1020) has a thickness of up to about 100 micrometers.
53. The fuel cell assembly of clause 52, wherein said thickness of said electrolyte (1020) is up to about 20 micrometers.
54. The fuel cell assembly of clause 53, wherein said thickness of said electrolyte (1020) is up to about 10 micrometers.
55. The fuel cell assembly of clause 45, wherein said electrolyte (1020) comprises at least one of yttria-stabilized zirconia, lanthanum gallate, doped cerium oxide, and ceria-stabilized zirconia.
56. The fuel cell assembly of clause 45, wherein said anode (1022) comprises at least one of nickel, nickel oxide, a platinum-group metal, and yttria-stabilized zirconia.
57. The fuel cell assembly of clause 45, wherein said interconnect (1002) comprises at least one of a metal and lanthanum chromite.
58. The fuel cell of clause 39, wherein said at least one substrate (202) comprises one of an anode (1022) and a cathode (1018).
59. The fuel cell assembly of clause 39, wherein said at least one dense layer (912) comprises a material comprising at least one component layer (204) of said plurality of component layers.
60. The fuel cell assembly of clause 59, wherein said dense layer (912) comprises a material comprising at least one of an interconnect (1002) of said fuel cell assembly and an electrolyte (1020) of said fuel cell assembly.
61. The fuel cell assembly of clause 39, wherein said fuel cell assembly further comprises at least one diffusion barrier disposed on at least one of
   a. said substrate (202), and
   b. at least one individual layer of said plurality of fuel cell component layers (204).
62. The fuel cell assembly of clause 61, wherein said diffusion barrier comprises a material comprising an oxide.
63. The fuel cell assembly of clause 62, wherein said oxide comprises an oxide selected from the group consisting of cerium-gadolinium oxide and samarium-doped cerium oxide.
64. The fuel cell assembly of clause 39, wherein at least one component layer (204) of said plurality of fuel cell component layers (204) comprises a gradient in at least one property selected from the group consisting of composition, grain size, and porosity.
65. A fuel cell assembly, comprising:
   at least one unit, said unit comprising
   an interconnect (1002) substrate (202), wherein said substrate (202) further comprises at least one through-thickness hole;
   a plurality of fuel cell component layers (204), wherein each layer of said plurality comprises an edge (304) bordering said layer, said edge (304) comprising a proximal portion adjacent to said hole and a distal portion opposite to said proximal portion, said plurality comprising
   an anode (1022) layer disposed on said substrate (202),
   a dense electrolyte (1020) layer disposed over said anode (1022), wherein said dense electrolyte (1020) layer overlaps substantially all of said edge (304) of said anode (1022) layer to substantially hermetically seal said anode (1022) layer from the remainder of said plurality of layers, and
   a cathode (1018) layer disposed over said electrolyte (1020) layer; and a dense sealing layer disposed over said distal portion of said edge (304) of said cathode (1018) layer, said dense layer (912) substantially hermetically sealing said distal portion of said edge (304).
66. The fuel cell assembly of clause 65, wherein said assembly comprises a plurality of said units, said units stacked such that said through-thickness holes are aligned to allow flow of gas within said fuel cell assembly.

## Claims

1. A method for manufacturing a fuel cell assembly (900), said method comprising:
providing at least one substrate (202); and
disposing a plurality of fuel cell component layers (204) on said substrate (202) by at least one physical vapor deposition (PVD) process, wherein each layer of said plurality comprises an edge (304) bordering said layer.

2. The method of claim 1, wherein disposing said plurality of fuel cell component layers (204) comprises disposing at least one of an anode (1022), a cathode (1018), an electrolyte (1020), and an interconnect (1002).

3. The method of claim 1 or 2, further comprising disposing a dense layer (912) of material by a physical vapor deposition process over at least a portion of said edge (304) of at least one fuel cell component layer (204) to seal said edge (304) of said at least one component layer (204).

4. The method of claim 3, wherein disposing said dense layer (912) further comprises disposing said dense layer (912) to substantially hermetically seal said edge (304) of said at least one component layer (204).

5. A method for manufacturing a fuel cell assembly, said method comprising:
providing at least one substrate (202);
disposing a plurality of fuel cell component layers (204) on said substrate (202) by at least one physical vapor deposition process, wherein each layer of said plurality comprises an edge (304) bordering said layer; and
disposing a dense layer (912) of material by said physical vapor deposition process over at least a portion of said edge (304) of at least one fuel cell component layer to seal said edge (304) of said at least one component layer (204).

6. A fuel cell assembly, comprising:
at least one unit, said at least one unit comprising
at least one substrate (202);
a plurality of fuel cell component layers (204) disposed on said substrate (202), wherein each layer of said plurality comprises an edge (304) bordering said layer; and
at least one dense layer (912) of material disposed over at least a portion of said edge (304) of at least one fuel cell component layer, where in said at least one dense layer (912) seals at least said portion of said edge (304).

7. The fuel cell assembly of claim 6, wherein said at least one dense layer (912) substantially hermetically seals at least said portion of said edge (304).

8. The fuel cell assembly of claim 6 or 7, wherein said at least one substrate (202) comprises an interconnect (1002).

9. A fuel cell assembly, comprising:
at least one unit, said unit comprising
an interconnect (1002) substrate (202), wherein said substrate (202) further comprises at least one through-thickness hole;
a plurality of fuel cell component layers (204), wherein each layer of said plurality comprises an edge (304) bordering said layer, said edge (304) comprising a proximal portion adjacent to said hole and a distal portion opposite to said proximal portion, said plurality comprising
an anode (1022) layer disposed on said substrate (202),
a dense electrolyte (1020) layer disposed over said anode (1022), wherein said dense electrolyte (1020) layer overlaps substantially all of said edge (304) of said anode (1022) layer to substantially hermetically seal said anode (1022) layer from the remainder of said plurality of layers, and
a cathode (1018) layer disposed over said electrolyte (1020) layer; and
a dense sealing layer disposed over said distal portion of said edge (304) of said cathode (1018) layer, said dense layer (912) substantially hermetically sealing said distal portion of said edge (304).

10. The fuel cell assembly of claim 9, wherein said assembly comprises a plurality of said units, said units stacked such that said through-thickness holes are aligned to allow flow of gas within said fuel cell assembly.
